# FASCICULE DE BREVET EUROPEEN

(11) **EP 4 453 623 B1**
(45) Date de publication et mention de la délivrance du brevet: **09.12.2026**
(21) Numéro de dépôt: 22839821.0
(22) Date de dépôt: 20.12.2022
(51) Int. Cl.: G02B 1/18

(54) **DISPOSITIF COMPRENANT UNE FENÊTRE OPTIQUE RECOUVERTE D'UNE ÉLECTRODE EN DIAMANT DOPÉ AVEC FONCTIONNALITÉ ACTIVE D'ÉLIMINATION DES SALISSURES**
VORRICHTUNG, ENTHALTEND EIN OPTISCHES FENSTER MIT EINER DOTIERTEN DIAMANTELEKTRODE MIT AKTIVER FÄULNISENTFERNUNGSFUNKTION
DEVICE COMPRISING AN OPTICAL WINDOW COVERED WITH A DOPED DIAMOND ELECTRODE WITH ACTIVE FOULING REMOVAL FUNCTIONALITY

(30) Priorité: 21.12.2021 FR 2114085
(43) Date de publication de la demande: 30.10.2024
(73) Titulaire: THALES, 92190 Meudon (FR)
(72) Inventeur: GUILLEMET, Raphaël, 91767 PALAISEAU CEDEX (FR); CHOLET, Julie, 91767 PALAISEAU CEDEX (FR); JUSSEY, Doriane, 91767 PALAISEAU CEDEX (FR); GARABEDIAN, Patrick, 91767 PALAISEAU CEDEX (FR)
(74) Mandataire: Lavoix
(86) Numéro de dépôt international: PCT/EP2022/086841
(87) Numéro de publication internationale: WO 2023/118038

(56) Documents cités:
- WO-A1-2009/000490
- WO-A1-2017/037094
- US-A1- 2013 228 547
- US-A1- 2016 287 113
- US-A1- 2017 241 899
- US-A1- 2020 086 346

## Description

La présente invention concerne un dispositif comprenant une fenêtre optique comprenant à sa surface deux électrodes reliées à un générateur de tension dans laquelle au moins une des électrodes est une électrode en diamant dopé.

L'invention s'applique au domaine des fenêtres optiques, de surface nanostructurée ou non.

Les fenêtres optiques sont des pièces optiquement transparentes qui permettent de transmettre la lumière dans une large plage de longueurs d'onde allant du visible à l'infrarouge moyen et lointain. Ces fenêtres sont en contact direct avec l'atmosphère et en particulier exposées aux intempéries. Ainsi, elles sont donc souvent sujettes à l'encrassement. Dans de nombreuses applications et notamment pour des jumelles ou des caméras, il est souhaitable que leur surface reste propre au cours du temps.

Pour éviter l'accumulation de particules, de résidus ou de gouttes d'eau par exemple sur leur surface, les fenêtres optiques ont été rendues superhydrophobes par nanostructuration puis fonctionnalisation de leur surface, par exemple par dépôt de polytétrafluoroéthylène (PTFE) ou d'une monocouche d'un polymère fluorocarboné.

Néanmoins, ces techniques n'empêchent pas l'encrassement (ou fouling en anglais), c'est-à-dire l'adsorption à la surface de composés tels que les micro-organismes, les plantes, les algues ou les cristaux de sels, ni même la stagnation en surface de composés organiques ou inorganiques tels des hydrocarbures

Afin de nettoyer la surface des fenêtres optiques, seule une action manuelle ou automatique à l'aide de chiffons, brosses s'est avérée efficace. Il est connu de l'art antérieur d'appliquer un plasma d'hydrogène sur les fenêtres optiques afin d'éliminer les composés organiques et donc de nettoyer la surface.

Toutefois, ces procédés de nettoyage sont inadaptés aux surfaces nanostructurées. Par ailleurs, ces nettoyages ne peuvent pas se faire lors des conditions opérationnelles et nécessitent donc d'être effectués lors d'opérations de maintenance dédiées.

Ainsi, il est nécessaire de développer une solution permettant le décrassage de la fenêtre optique en situation opérationnelle.

La présente invention a pour but de proposer un dispositif comprenant une fenêtre optique sur laquelle est déposée une couche de diamant dopé permettant de conférer à ladite fenêtre des propriétés anti-encrassement

L'invention est définie par les caractéristiques de la revendication 1.

A cet effet, l'invention a pour objet une fenêtre optique comprenant à sa surface deux électrodes reliées à un générateur de tension dans laquelle au moins une des électrodes est une électrode en diamant dopé, le dopage du diamant étant réalisé avec un élément chimique permettant de rendre le diamant conducteur.

Selon d'autres aspects avantageux de l'invention, la fenêtre optique peut comprendre une ou plusieurs des caractéristiques suivantes prises isolément ou suivant toutes les combinaisons techniquement possibles :
- la deuxième électrode est déposée en périphérie de la surface de ladite fenêtre et est séparée de l'électrode en diamant dopé.
- l'électrode en diamant dopé est dopée à une concentration de 10¹⁹ à 10²¹ atomes/cm³, de préférence de 10¹⁹ à 10²⁰ atomes/cm³.
- le diamant dopé est dopé par un élément chimique permettant de rendre le diamant conducteur, plus particulièrement dopé au bore ou à l'azote
- la deuxième électrode est une contre-électrode en métal non oxydable, de préférence en diamant dopé, or, platine ou tungstène.
- la fenêtre optique est constituée de diamant ou est constituée d'un matériau isolant transparent, plus particulièrement le germanium, le silicium ou le verre.

On décrit également un procédé de fabrication d'une fenêtre optique selon l'invention comprenant les étapes suivantes :
- Dépôt d'une couche de diamant dopé sur la fenêtre optique
- Dépôt de la deuxième électrode

Le procédé peut comprendre en outre une étape préliminaire de nanostructuration de la fenêtre préalablement à l'étape de dépôt de diamant dopé ou comprenant une étape de nanostructuration de la couche de diamant dopé après le dépôt de la couche de diamant dopé.

Dans le mode de réalisation selon lequel la fenêtre optique est nanostructurée avant l'étape de dépôt d'une couche de diamant dopé sur la fenêtre optique le dépôt du diamant est un dépôt en couche mince, c'est-à-dire un dépôt d'une épaisseur comprise entre 100 et 200 nm. La méthode de mesure de l'épaisseur de la couche est de préférence une méthode au cours de laquelle les épaisseurs sont mesurées en fonction du temps de dépôts. La mesure d'épaisseur peut être effectuée par toute méthode connue de l'homme du métier par exemple à l'aide d'une sonde ionique focalisée (FIB pour Focused Ion Beam).

De préférence, le dépôt du diamant dopé en couche mince est réalisé par dépôt chimique en phase vapeur assisté par plasma (MPCVD pour Microwave Plasma Chemical Vapor Deposition).

Dans le mode de réalisation selon lequel la fenêtre optique n'est pas nanostructurée mais la couche de diamant dopé déposée est nanostructurée, le dépôt du diamant dopé est réalisé en couche épaisse, c'est-à-dire une couche d'une épaisseur comprise entre 800 nm (pour des applications dans le domaine du visible) et 7 µm (pour des applications dans le domaine de l'infra-rouge), préalablement à la nanostructuration du diamant dopé.

De préférence, l'électrode de diamant dopé est déposée au centre de la surface de la fenêtre. Avantageusement l'électrode de diamant dopé est déposée sur la surface de la fenêtre optique à nettoyer.

De préférence, une portion de surface de fenêtre optique en contact avec l'atmosphère sépare l'électrode de la contre-électrode.

Avantageusement, la portion de surface de fenêtre optique en contact avec l'atmosphère permet d'isoler l'électrode de la contre-électrode.

En particulier, l'électrode de diamant dopé peut couvrir jusqu'à 80% de la surface de la fenêtre optique.

De préférence, la contre-électrode se situe en périphérie de la fenêtre optique, plus particulièrement dans sa zone d'exclusion.

On entend par périphérie ou zone d'exclusion la zone circulaire de 5 mm de large en bordure de fenêtre.

La présente invention a également pour objet l'utilisation, à la surface d'une fenêtre optique, d'un système de deux électrodes, dont au moins l'une est en diamant dopé, reliées par un générateur de tension, pour le traitement anti-encrassement de ladite fenêtre.

La présente invention a également pour objet un dispositif comprenant au moins une fenêtre optique, le dispositif étant un dispositif de vision tel les capteurs visible ou infrarouge des caméras ou jumelles, l'instrumentation spatiale d'observation terrestre, les systèmes de surveillance pour les domaines maritime et terrestre, les télédétections par laser (LIDARS pour Light ou Laser Imaging Detection And Ranging), notamment les anémomètres pour la mesures des paramètres de vol, et l'ensemble des senseurs optroniques.

Ces caractéristiques et avantages de l'invention apparaitront à la lecture de la description qui va suivre, donnée uniquement à titre d'exemple et non limitatif, et faite en référence aux dessins annexés, sur lesquels :
- [Fig 1] la figure 1 est une représentation schématique vue du dessus d'une fenêtre optique non nanostructurée qui ne constitue pas un mode de réalisation, la fenêtre optique comprenant une électrode de diamant dopé et une contre-électrode ;
- [Fig 2] la figure 2 est une représentation schématique vue de côté d'une fenêtre optique nanostructurée selon un mode de réalisation de l'invention ; et
- [Fig 3] la figure 3 est une représentation schématique vue de côté d'une fenêtre optique comprenant une électrode au diamant dopé nanostructurée selon un autre mode de réalisation de l'invention.

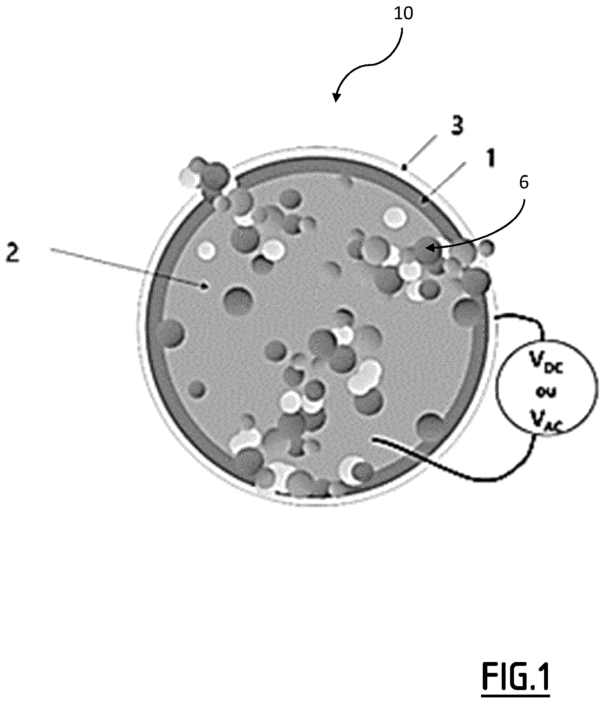

La figure 1 illustre une fenêtre optique 10 qui ne constitue pas un mode de réalisation.

La fenêtre optique 10 comprend à sa surface 1 deux électrodes 2 et 3 nommées ci-après électrode 2 et contre-électrode 3 et déposées sous forme de couches sur la surface de la fenêtre optique 1.

La couche peut être une couche mince ou une couche épaisse. On entend par couche mince une couche d'épaisseur comprise entre 100 et 200 nm et couche épaisse une couche d'épaisseur comprise entre 800 nm et 7 µm.

L'électrode 2 est en diamant dopé, le dopage du diamant étant réalisé avec un élément chimique permettant de rendre le diamant conducteur.

En particulier, le diamant est dopé au bore, à l'azote, plus préférentiellement au bore.

En particulier, la contre-électrode 3 est en en métal non oxydable, de préférence en diamant dopé, or, platine, nickel ou tungstène.

Selon un exemple avantageux de l'invention, l'électrode 2 et la contre-électrode 3 sont réalisées dans le même matériau, de préférence en diamant dopé avec le même élément chimique dopant, de préférence le bore.

Avantageusement, selon l'invention, l'électrode 2 et la contre-électrode 3 sont toutes les deux en diamant dopé au bore.

L'électrode 2 et la contre-électrode 3 sont reliées entre elles par un générateur de tension.

En particulier, le générateur de tension peut fournir une tension continue ou alternative, de préférence une tension alternative.

Sans vouloir être lié par une quelconque théorie, le désencrassement de la fenêtre optique 10 se fait au niveau de la couche de diamant dopé. Pour se faire, la fenêtre optique 10 doit être en contact avec un électrolyte 6. On entend désigner par « électrolyte » une substance, de préférence liquide, conductrice en raison de la présence d'ions mobiles. L'électrolyte peut être de tout type, notamment il peut être de l'eau, l'eau peut être de l'eau propre ou bien une solution aqueuse comprenant des polluants, par exemple boue, etc. Plus particulièrement, l'électrolyte 6 est de l'eau .

Sans vouloir être lié par une quelconque théorie, par application d'une différence de potentiel entre l'électrode 2 et la contre-électrode 3 en présence de l'électrolyte 6, un contact électrique se crée entre les deux électrodes. Le courant électrique ainsi généré entraine l'électrolyse de l'électrolyte 6, et en particulier la génération, dans le cas de l'eau, de radicaux hydroxyles OH-. Les radicaux OH- oxydent ensuite en CO2 les composés organiques adsorbés à la surface 1 de la fenêtre optique 10. Ainsi, les composés organiques sont éliminés de la surface 1 de la fenêtre 10, qui est nettoyée.

La surface 1 de la fenêtre optique 10 peut être également nanostructurée selon un mode de réalisation.

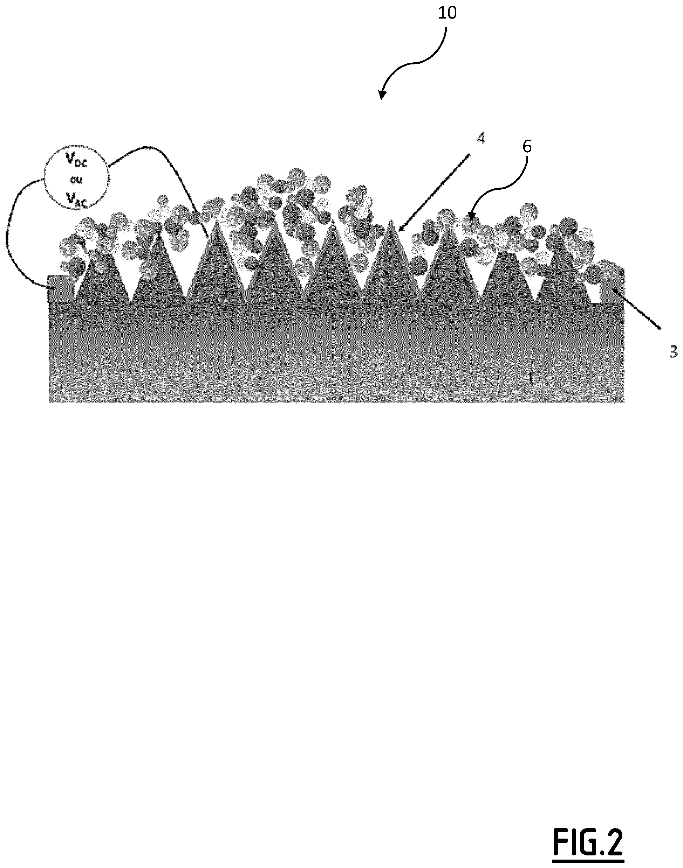

Dans l'exemple de la figure 2, la surface 1 de la fenêtre optique 10 est nanostructurée et au moins la partie nanostructurée est recouverte d'une couche, de préférence couche mince, de diamant dopé 4.

Selon un mode préféré de réalisation de la fenêtre optique 10 selon la figure 2, la couche mince de diamant dopé 4 est d'épaisseur comprise entre 100 et 200 nm de préférence d'épaisseur comprise entre 100 nm et 150 nm.

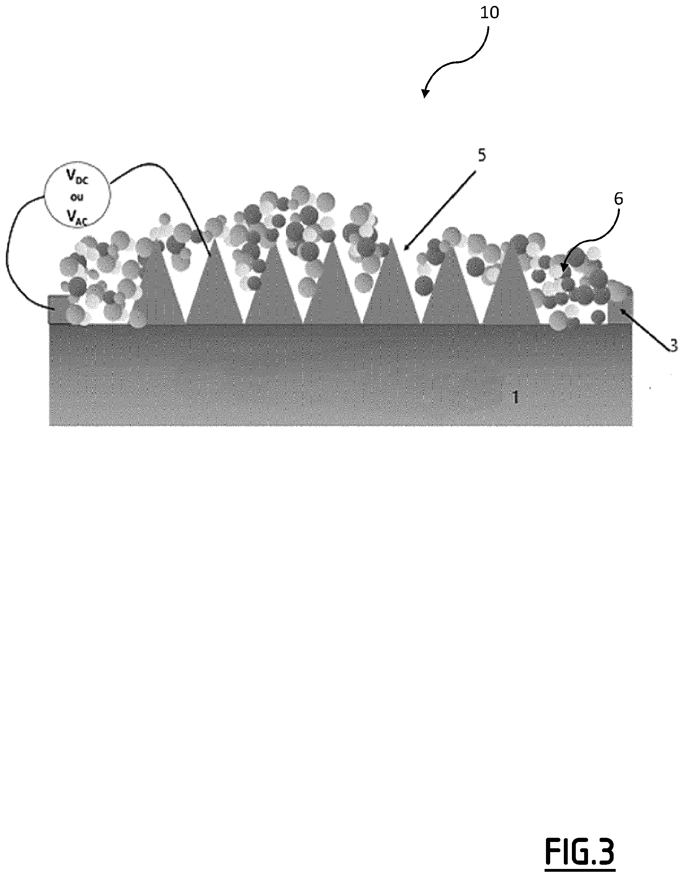

Selon un autre mode de réalisation illustré dans la figure 3, l'électrode en diamant dopé est une électrode en diamant dopé nanostructurée 5.

Selon un mode préféré de réalisation de la fenêtre optique 1 selon la figure 3, la couche de l'électrode en diamant dopé 5 est une couche épaisse d'épaisseur comprise entre 800 nm pour des applications dans le visible et 7 µm pour des applications dans l'infra-rouge.

La couche est d'épaisseur 800 nm pour une utilisation dans le visible, structurée avec une période de 200 nm, d'épaisseur 4 µm dans le moyen infrarouge (MWIR pour Mid-wave infrared) structurée avec une période de 1 µm et d'épaisseur 7 µm dans l'infrarouge lointain (LWIR pour Long-wave infrared) structurée avec une période de 1,5 µm. La nanostructuration de la fenêtre ainsi obtenue est une structuration sub-longueur d'onde et permet d'éviter un phénomène de diffraction. Ainsi, il est possible d'obtenir une propriété antireflet.

Le procédé de fabrication d'une fenêtre optique 10 qui ne constitue pas un mode de réalisation sera désormais expliqué en référence à la figure 1.

Selon une première variante, l'électrode 2 et la contre-électrode 3 sont toutes les deux de même nature et en diamant dopé.

Une couche de diamant dopé est déposée sur tout ou partie de la surface 1 de la fenêtre optique 10, de préférence sur l'ensemble de la surface 1 de la fenêtre optique 10.

Le dépôt de la couche de diamant dopé peut être réalisé par toute méthode connue de l'homme du métier, notamment par dépôt chimique en phase vapeur assisté par plasma (MPCVD) ou par une méthode Haute Pression Haute Température (HPHT), de préférence par MPCVD.

Ainsi, suite au dépôt, la couche de diamant recouvre de manière uniforme et sans discontinuité la surface 1 de la fenêtre optique 10.

L'étape de dépôt est suivie d'une étape de lithographie puis d'une gravure plasma. Ces deux étapes successives permettent de tracer une bande puis de dissocier la zone d'exclusion de la fenêtre optique 10 de la surface 1 de la fenêtre optique 10 à nettoyer. La couche de diamant dopé située dans la zone d'exclusion correspond à la contre-électrode 3 et la couche de diamant dopé située sur la surface 1 de la fenêtre optique 10 à nettoyer correspond à l'électrode 2.

Selon une deuxième variante, l'électrode 2 et la contre-électrode 3 sont de deux natures différentes.

Pour le dépôt de la contre-électrode, de préférence une résine, notamment de type Shipley, est déposée, puis insolée et développée. La contre-électrode 3 est ensuite déposée sur la fenêtre optique 10, par pulvérisation cathodique ou évaporation. Cette étape de dépôt est suivie d'une étape de retrait de la résine (ou lift-off) à l'aide d'un solvant, tel que l'acétone

L'électrode 2 en diamant dopé est ensuite déposée sur la surface 1 de la fenêtre optique 10 à nettoyer.

Le procédé de fabrication selon un mode de réalisation est également décrit en référence à la figure 2.

Selon une première variante du mode de réalisation, l'électrode 4 et la contre-électrode 3 sont toutes les deux de même nature et en diamant dopé.

La première étape est une étape de nanostructuration de la surface 1 de la fenêtre optique 10.

La nanostructuration est réalisée par tout méthode connue par l'homme du métier, et notamment par nano-impression. D'autres techniques de nanostructuration connues de l'homme du métier peuvent être utilisées, telles que la gravure plasma pour l'obtention d'une nanostructuration non périodique grâce à un masque de nanoparticules (de silice par exemple) et déposées aléatoirement sur la surface à nano-structurer ou par technique de structuration laser (Jinguang Cai et al., Materials Horizons, 2015, volume 2, pages 37-53).

Une deuxième étape consiste à déposer le diamant dopé sur toute ou partie, de préférence toute, la surface 1 de la fenêtre optique 10, suivie d'une lithographie puis d'une gravure afin d'obtenir l'électrode 4 et la contre-électrode 3.

De préférence, la gravure est une gravure ionique par faisceau d'ions d'argon et d'oxygène (IBE pour Ion Beam Etching).

Selon une deuxième variante, l'électrode 4 et la contre-électrode 3 sont de deux natures différentes.

Un premier mode de réalisation de la deuxième variante consiste en une étape de nanostructuration de la fenêtre optique 10 suivie du dépôt de la couche de la contre-électrode 3 de préférence à la périphérie de la fenêtre 10. Une étape de lithographie et retrait de résine est ensuite réalisée, suivie du dépôt de la couche de diamant dopé 4 constitutif de l'électrode.

De préférence, un deuxième mode de réalisation consiste à déposer la contre-électrode 3, à nanostructurer la surface 1 de la fenêtre optique 10 à nettoyer puis à déposer une couche 4 de diamant dopé constitutif de l'électrode.

Le procédé de fabrication selon un autre mode de réalisation en référence à la figure 3 est décrit par la suite.

Selon une première variante de l'autre mode de réalisation, l'électrode 5 et la contre-électrode 3 sont toutes les deux de même nature et en diamant dopé.

La première étape de la variante consiste à déposer une couche 5 de diamant dopé sur tout ou partie de la fenêtre 10, de préférence sur l'ensemble de la fenêtre 10. Puis, la couche de diamant dopé 5 est nanostructurée. Enfin, l'étape de lithographie et de gravure permet de dissocier l'électrode 5 de la contre-électrode 3.

Selon une deuxième variante, l'électrode 5 et la contre-électrode 3 sont de deux natures différentes.

Selon un premier mode de réalisation, la couche 5 de diamant dopé de l'électrode 2 est déposée sur la surface 1, puis la couche 5 est nanostructurée. Enfin la contre-électrode 3 est déposée sur la surface d'exclusion de la fenêtre optique 10.

Selon un deuxième mode de réalisation, la contre-électrode 3 est déposée sur la surface d'exclusion de la fenêtre optique 10, suivie du dépôt de la couche 5 de diamant dopé. Enfin, la nanostructuration de la couche 5 est réalisée.

Dans les différents modes de réalisation, les méthodes de nano-structuration, dépôt de la couche de diamant dopé et dépôt de l'électrode sont telles que décrites ci-dessus.

On conçoit ainsi que la présente invention présente un certain nombre d'avantages.

Tout d'abord, l'électrode en diamant dopé est transparente à la longueur d'onde ou dans la gamme de longueurs d'onde d'utilisation. Par gamme de longueur d'onde, on entend toute gamme dans les longueurs d'onde du visible à l'infrarouge. Ainsi, elle est avantageuse dans le domaine des fenêtres optiques.

Le diamant possède d'excellentes propriétés mécaniques en termes de dureté, de module d'Young et de ténacité, ce qui confère à la fenêtre optique selon l'invention une robustesse mécanique avantageuse.

Le diamant dopé, rendu conducteur par dopage, comprend une conductivité quasi-métallique, ce qui le rend électro-magnétiquement compatible, ce qui le rend avantageux dans des applications aéroportées.

Le diamant dopé au bore possède une large réactivité électrochimique qu'il confère à la fenêtre optique dans laquelle il est inséré.

Ainsi, la fenêtre optique selon l'invention possède une robustesse mécanique des propriétés anti-encrassement et des propriétés antireflets.

En outre, le nettoyage et le désencrassement des fenêtres optiques selon l'invention peut se faire en situation opérationnelle.

## Revendications

1. Dispositif comprenant au moins une fenêtre optique (10) comprenant à sa surface deux électrodes (2,3) reliées à un générateur de tension dans laquelle au moins une des électrodes est une électrode en diamant dopé (2), le dopage du diamant étant réalisé avec un élément chimique permettant de rendre le diamant conducteur, le dispositif étant choisi parmi les capteurs visible ou infrarouge des caméras ou jumelles, l'instrumentation spatiale d'observation terrestre, les systèmes de surveillance pour les domaines maritime et terrestre, les LIDARS (notamment les anémomètres pour la mesures des paramètres de vol), et l'ensemble des senseurs optroniques,
le dispositif étant **caractérisé en ce que** la surface (1) de la au moins une fenêtre optique (10) est nanostructurée ou l'électrode de diamant dopé (5) est nanostructurée.

2. Dispositif selon la revendication 1, dans lequel la deuxième électrode (3) de la au moins une fenêtre optique (10) est déposée en périphérie de la surface (1) de ladite fenêtre (10) et est séparée de l'électrode en diamant dopé (2).

3. Dispositif selon la revendication 1 ou 2, dans lequel le diamant est dopé au bore.

4. Dispositif les revendications 1 à 3 dans laquelle la deuxième électrode (3) de la au moins une fenêtre optique (10) est une contre électrode en métal non-oxydable, de préférence en diamant dopé, or, platine, nickel ou tungstène.

## Patentansprüche

1. Vorrichtung umfassend mindestens ein optisches Fenster (10), das an seiner Oberfläche zwei Elektroden (2,3) umfasst, die mit einem Spannungsgenerator verbunden sind, wobei mindestens eine der Elektroden eine Elektrode aus dotiertem Diamant (2) ist, wobei die Dotierung des Diamanten mit einem chemischen Element erfolgt, das es ermöglicht, den Diamanten leitfähig zu machen, wobei die Vorrichtung ausgewählt ist aus den Sensoren für den sichtbaren oder infraroten Bereich von Kameras oder Ferngläsern, der Weltrauminstrumentierung zur Erdbeobachtung, den Überwachungssystemen für maritime und terrestrische Bereiche, den LIDAR-Systemen (insbesondere den Anemometern für die Messung der Flugparameter) und der Gesamtheit der optronischen Sensoren, wobei die Vorrichtung **dadurch gekennzeichnet ist, dass** die Oberfläche (1) des mindestens einen optischen Fensters (10) nanostrukturiert ist oder die Elektrode aus dotiertem Diamant (5) nanostrukturiert ist.

2. Vorrichtung nach Anspruch 1, bei der die zweite Elektrode (3) des mindestens einen optischen Fensters (10) am Rand der Oberfläche (1) des genannten Fensters (10) aufgebracht und von der Elektrode aus dotiertem Diamant (2) getrennt ist.

3. Vorrichtung nach Anspruch 1 oder 2, bei der der Diamant mit Bor dotiert ist.

4. Vorrichtung nach Anspruch 1 bis 3, bei der die zweite Elektrode (3) des mindestens einen optischen Fensters (10) eine Gegenelektrode aus nicht oxidierbarem Metall, vorzugsweise aus dotiertem Diamant, Gold, Platin, Nickel oder Wolfram, ist.

## Claims

1. A device comprising at least one optical window (10) comprising on the surface thereof, two electrodes (2,3) connected to a voltage generator wherein at least one of the electrodes is a doped diamond electrode (2), the doping of the diamond being carried out with a chemical element serving to make the diamond conductive, the device being chosen from visible or infrared sensors of cameras or binoculars, space instrumentation for terrestrial observation, surveillance systems for maritime and terrestrial domains, LIDARS (in particular anemometers for measuring flight parameters), and all optronic sensors, the device being **characterized in that** the surface (1) of the at least one optical window (10) is nanostructured or the doped diamond electrode (5) is nanostructured,.

2. The device according to claim 1, wherein the second electrode (3) of the at least one optical window (10) is deposited peripherally of the surface (1) of said window (10) and is separated from the doped diamond electrode (2).

3. The device according to claim 1 or 2, wherein the diamond is doped with boron.

4. The device according to claims 1 to 3 wherein the second electrode (3) of the at least one optical window (10) is a counter-electrode of non-oxidizable metal, preferably of doped diamond, gold, platinum, nickel or tungsten.
